# FASCICULE DE BREVET EUROPEEN

(11) **EP 0 340 122 B1**
(45) Date de publication et mention de la délivrance du brevet: **10.02.1993**
(21) Numéro de dépôt: 89420133.4
(22) Date de dépôt: 13.04.1989
(51) Int. Cl.: F16B 4/00

(54) **Dispositif d'assemblage rapide d'éléments de raccordement pour des structures, ossatures, supports et autres assemblages**
Schnellverbindungsvorrichtung für Verbindungselemente von Aufbauten, Gerüsten, Trägern und anderen Anordnungen
Quick connecting device for connecting elements of structures, scaffolds, supports and other assemblies

(30) Priorité: 27.04.1988 FR 8805944
(43) Date de publication de la demande: 02.11.1989
(73) Titulaire: AGENSTUB S.A., F-42130 SAINTE.AGATHE.LA.BOUTERESSE (FR)
(72) Inventeur: Charondiere, Georges, F-42160 Andrezieux Boutheon (FR)
(74) Mandataire: Dupuis, François

(56) Documents cités:
- CH-A- 333 634
- DE-B- 1 066 504
- FR-A- 2 145 220
- GB-A- 870 927
- GB-A- 1 242 395

## Description

L'invention a pour objet un dispositif d'assemblage rapide d'éléments de raccordement pour des structures, ossatures, supports et autres assemblages.

Lors de la conception de structures, ossatures et assemblages de barres, tubulaires ou non et d'autres éléments du même type; on utilise des raccords, manchons et aryens de liaison similaires. Généralement, ces raccords sont constitués par des demi-coquilles profilées aux formes et dimensions désirées du tube ou similaire à enserrer et reliées par un ou des éléments de liaison et de fermeture et blocage. Les demi-coquilles sont engagées intérieurement partiellement dans les éléments à assembler. Pour assurer la fixation et le maintien, on utilise des vis de liaison autorisant par dévissage un écartement des demi-coquilles autorisant leur expansion et donc un blocage des éléments accolés. Ces demi-coquilles peuvent être en alliage léger, matière plastique ou autres. De tels moyens de jonction et raccordement présente plusieurs inconvénients. Le blocage de la vis engendre une opération longue, il est courant par ailleurs que les vis se perdent et surtout ce système ne permet pas une bonne répartition de la pression sur toute la périphérie du corps d'assemblage. En outre, la conception des différents systèmes de raccordement nécessite des pièces aux profils bien particuliers ce qui augmente les coûts de fabrication des moules.

Le brevet CH-A-333 634 est par ailleurs cité au titre de l'art antérieur selon la règle 27 (1)(c) de la CBE.

Le but recherché selon l'invention était de remédier à ces inconvénients et de proposer un système simple pour l'application d'un concept nouveau de serrage des demi-coquilles du dispositif de raccordement.

Selon une première caractéristique, le dispositif comprend une enveloppe gonflable insérée dans un ensemble intermédiaire de deux demi-coquilles aux formes et profils variables en fonction des pièces ou éléments à assembler, les deux demi-coquilles étant engagées partiellement dans lesdits éléments et étant susceptibles de s'écarter l'un de l'autre lors du gonflage et l'expansion de l'enveloppe assurant un blocage et serrage des éléments assemblés, et en ce que les deux demi-coquilles sont agencées intérieurement avec un évidement autorisant le logement, centrage, maintien de l'enveloppe en définissant son volume expansible, et limitant l'expansibilité longitudinale de l'enveloppe par un ceinturage périphérique formant butée, et en ce que l'une au moins des demi-coquilles est agencée avec une ouverture transversale autorisant le passage de la valve de l'enveloppe gonflable.

Ces caractéristiques et d'autres encore ressortiront bien de la suite de la description.

Pour fixer l'objet de l'invention d'une manière non limitative illustrée aux figures des dessins où :
- La figure 1 est une vue en perspective du dispositif selon l'invention en vue éclatée avant montage.
- La figure 2 est une vue en coupe longitudinale du dispositif après montage selon la figure 1 dans un exemple d'assemblage.
- Les figures 3, 4, 5 et 6 sont des vues illustrant des formes de liaison non limitatives par des angulations obliques, perpendiculaire en T ou avec des galettes de raccordement à bras multiples.
- La figure 7 est une vue en coupe selon la ligne A-A de la figure 6.
- La figure 8 est une vue à caractère schématique illustrant un autre profil d'assemblage de demi-coquilles aux formes variées.

Afin de rendre plus concret l'object de l'invention, on le décrit maintenant d'une manière non limitative illustrée aux figures des dessins.

Le dispositif d'assemblage et de raccordement consiste dans l'utilisation d'une enveloppe gonflable (1) du type boudin, vessie, chambre à air insérée dans un ensemble intermédiaire de deux demi-coquilles aux formes et profils variables selon les besoins et éléments à assembler, ces deux demi-coquilles (2-3) étant engagées partiellement dans les éléments (4) à assembler et étant susceptibles de s'écarter l'une de l'autre lors de l''expansion de l'enveloppe gonflable assurant alors un blocage sur, régulier et entraînant une répartition des pressions sur l'ensemble de l'assemblage.

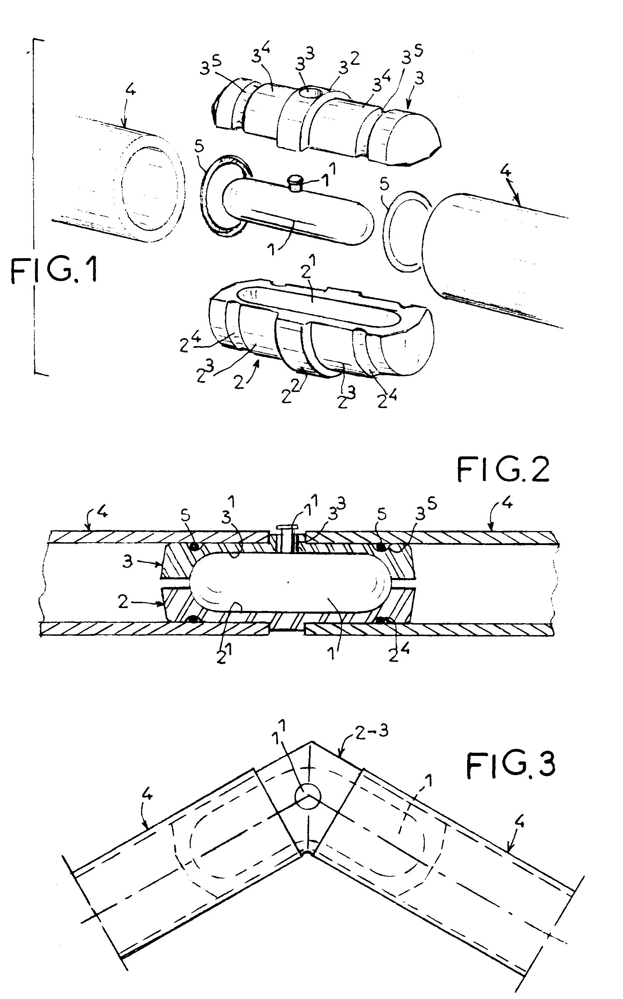

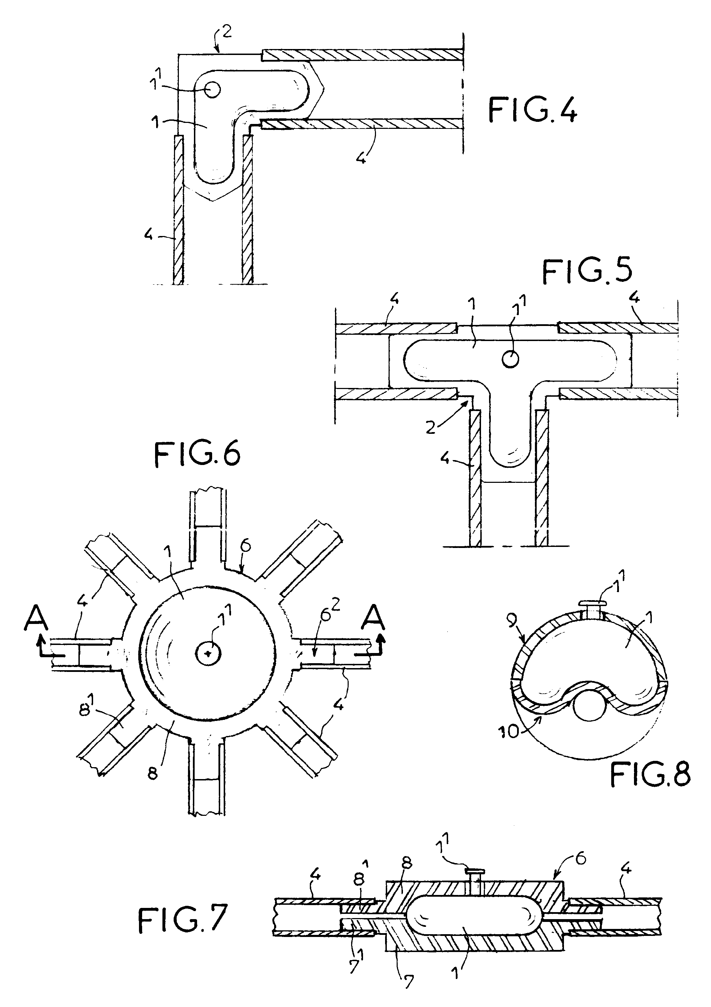

L'enveloppe gonflable (1) présente ainsi une valve (1¹) d'injection d'air d'accès aisé. Les deux demi-coquilles sont réalisées en tous matériaux désirés, tels que alliage léger, matière plastique et autres. Ces deux demi-coquilles peuvent être de forme identique et symétriques ainsi qu'illustrée figure 1 avec des profils extérieurs susceptibles de s'adapter parfaitement aux formes, profils et dimensions intérieures des éléments à assembler. En variante, les deux demi-coquilles peuvent être de forme différente selon la figure 8 par exemple tout en s'intégrant parfaitement dans les éléments à assembler.

En faisant référence maintenant aux figures des dessins, selon les figures 1 et 2, le dispositif comprend deux demi-coquilles (2-3) de forme allongée tubulaire agencée chacune intérieurement avec un évidement (2¹ - 3¹) autorisant le logement, centrage et maintien de l'enveloppe gonflable (1) en définissant son volume expansible. L'une au moins des demi-coquilles (3) par exemple est agencée avec une ouverture transversale (3³) autorisant le passage de la valve (1¹) de l'enveloppe. Les deux demi-coquilles présentent une portée centrale (2²-3²) se prolongeant de part et d'autre avec des portées (2³-3⁴) de section plus réduite s'emmanchant dans les éléments à raccorder et assembler. Ainsi qu'illustré l'ouverture (3³) de passage de la valve est réalisée sur la portée centrale (3²). Afin d'assurer une liaison des deux demi-coquilles entre elles, il est formé sur chacune d'elles extérieurement et transversalement des demi-rainures annulaires (2⁴-3⁵) venant en regard deux par deux et autorisant le passage de liens toriques (5) ou similaires, d'une certaine élasticité en fonction de la capacité d'expansion de demi-coquilles entre elles sous l'effet de gonflage de l'enveloppe. Il peut être prévu d'autres moyens d'assemblage par deux demi-coquilles tout en assurant leur maintien et restant élastique lors de leur expansibilité suite au gonflage de l'enveloppe.

Les éléments à raccorder viennent en butée contre les chants latéraux des portées médianes précitées (2²-3²).

En outre les évidements (2¹-3¹) formés dans les coquilles présentent un ceinturage périphérique formant butée et permettent de fixer en position l'enveloppe et limiter son expansion longitudinale provoquant ainsi l'expansion de celle-ci dans d'autres plans en particulier pour écarter les deux demi-coquilles. Le moyens de gonflage peut être une pompe et matériel similaire. On peut régler à volonté la force de pression du serrage réalisé.

Sans sortir du cadre de l'invention, le dispositif d'assemblage est adaptable à toutes formes de raccordement. Figure 3, on utilise deux demi-coquilles qui au lieu d'être dans un plan longiligne de raccordement présente une angulation α. Il peut être avantageusement réalisé pour des raisons de standardisation quelques angulations principales à 150°, 120°, 90°, 135°, 60°, 45° et autres , ces coquilles étant réalisées par moulage de fonderie, thermoformage ou injection selon la nature des matériaux de composition. Par ailleurs, pour assurer un certain jointement des éléments assemblés la portée médiane de chaque demi-coquille est profilée de manière adaptée aux formes nécessaires. On a illustré aux figures 4 et 5 des formes possibles de raccordement en L, en T. Aux figures 6 et 7 sont illustrées des galettes (6) d'assemblage à plusieurs bras (6²). Les deux demi-coquilles (7-8) présentent alors une section en forme de disque avec ou non des prolongements radiaux (7¹-8¹) s'intégrant dans lesdits bras (6²). L'enveloppe gonflable est disposée dans la partie évidée centrale de chaque disque. Dans l'hypothèse où les bras sont agencés intérieurement pour recevoir une partie de l'enveloppe la répartition des pressions s'effectue également sur les bras récepteurs des éléments à assembler.

On a illustré à titre de variante figure 8 une forme particulière des deux demi-coquilles (9-10). L'une d'elles au moins présente en particulier une forme en W avec des profils harmonieux et arrondis, autorisant le centrage et positionnement par l'extérieur d'un ou plusieurs câbles électriques par exemple.

L'invention trouve de nombreux avantages en particulier la simplicité du montage, la pression régulière exercée sur chaque partie et point d'assemblage. Le dispositif s'applique à tous systèmes de raccordement et d'assemblage pour raccord, manchons, galettes et similaires.

## Revendications

1. Dispositif d'assemblage rapide d'éléments ou pièces de raccordement pour des structures, ossatures, supports et autres assemblages caractérisé en ce qu'il comprend une enveloppe gonflable (1) insérée dans un ensemble intermédiaire de deux demi-coquilles (2-3) aux formes et profils variables en fonction des pièces ou éléments à assembler (4), les deux demi-coquilles étant engagées partiellement dans lesdits éléments et étant susceptibles de s'écarter l'un de l'autre lors du gonflage et l'expansion de l'enveloppe assurant un blocage et serrage des éléments assemblés, et en ce que les deux demi-coquilles (2-3) sont agencées intérieurement avec un évidement (2¹-3¹) autorisant le logement, centrage, maintien de l'enveloppe en définissant son volume expansible, et limitant l'expansibilité longitudinale de l'enveloppe par un ceinturage périphérique formant butée et en ce que l'une au moins des demi-coquilles est agencée avec une ouverture transversale (3³) autorisant le passage de la valve (1¹) de l'enveloppe gonflable.

2. Dispositif selon la revendication 1, caractérisé en ce que les deux demi-coquilles présentent une portée centrale (2²-3²) se prolongeant avec des portées de section plus réduite s'emmanchant dans les éléments à raccorder et à assembler.

3. Dispositif selon la revendication 2 caractérisé en ce que l'ouverture (3³) de passage de la valve est réalisée sur la portée centrale (3²) de l'une des demi-coquilles.

4. Dispositif selon la revendication 1 caractérisé en ce que les deux demi-coquilles sont assemblées entre elles avec des moyens de liaison et de retenue élastique lors de leur expansibilité inhérente au gonflage de l'enveloppe.

5. Dispositif selon l'une quelconque des revendications 1 à 4 caractérisé en ce que les deux demi-coquilles définissant un plan longiligne ou angulaire et sont de toutes formes nécessaires à un assemblage d'au moins deux éléments.

6. Dispositif selon l'une quelconque des revendications 1 à 4 caractérisé par son application à tous systèmes de raccordement et d'assemblage pour raccords, manchons, galettes et similaires.

7. Dispositif selon l'une quelconque des revendications 1 à 6 caractérisé en ce que l'une au moins des demi-coquilles est agencée avec un profil autorisant le centrage et positionnement extérieur de cables.

## Claims

1. Rapid assembling device of connection parts or elements for structures, frameworks, supports and other assemblies, characterized in that said device includes an inflatable envelope (1) inserted within an intermediate unit of two half-shells (2 - 3) the shapes and contours of which are varied in accordance with the parts or elements to be assembled (4), the two half-shells being engaged partially within said elements and capable of being spaced from one another during the inflating and the expansion of the envelope in order to provide an unterlocking and a tightening of the assembled elements ; and in that the two half-shells (2 - 3) are provided internally with a recess (2′ - 3′) permitting the housing, the centering and the securing of the envelope while defining the expansible volume thereof and restraining the longitudinal expansibility of said envelope by means of a stop-forming peripheral engirdling ; and in that one at least of the half-shells is provided with a transverse opening (3³) permitting the passage therethrough of the valve (1′) of the inflatable envelope.

2. Device as claimed in Claim 1, characterized in that the two half-shells are provided with a central bearing portion (2² - 3²) extended bearing portions of smaller sectional size fitting into the elements to be connected and assembled.

3. Device as claimed in Claim 2, characterized in that the opening (3³) for the passage of the valve therethrough is provided on the central bearing portion (3²) of one of the half-shells.

4. Device as claimed in Claim 1, characterized in that the two half-shells are assembled between one another with the aid of connecting and holding elastic means during the expansability thereof ; inherent to the inflating of the envelope.

5. Device as claimed in any one of Claims 1 to 4, characterized in that the two half-shells define a longilinear or angular plane, and are of any shape necessary for the assembly of at least two elements.

6. Device in accordance with any one of Claims 1 to 4, characterized in the applicability thereof for any systems of connection or assembly in the field of fittings, sleeves, bushings, pads or the liks.

7. Device in accordance with any one of Claims 1 to 6, characterized in that one at least of the half-shells is made with a contour permitting the centering and the external positioning of cables.

## Patentansprüche

1. Vorrichtung zum Schnellzusammenfügen von Verbindungselemente oder Verbindungsteilen für Strukturen, Gerüste, Unterlagen und gleichartige zusammengesetzten Baueinheiten, dadurch gekennzeichnet : dass diese Vorrichtung eine aufpumpbare umhüllung (1) aufweist, die in einer aus zweien Halbschalen (2 - 3) gebildeten Bauzwischeneinheit eingeführt ist, wobei die Profilierung und die Formgebung dieser halbschalen entsprechend den zusammenzufügenden Elementen oder Teilen (4) veränderlich sind, und zwar bei teilweisem Eingreifen beider Halbschalen in den besagten Elementen und mit der Möglichkeit für diese Halbschalen bei dem Aufpumpen und der Expansion der Umhüllung sich zum Blockieren sowie Festziehen der zusammengefügten Elemente auseinander zu entfernen ; dass die zweie Halbschalen (2 - 3) innenseitig mit einer Aussparung (2¹ - 3¹) zum Aufnehmen, Zentrieren und Festhalten der Umhüllung und Festsetzen des expansionsfähigen Raums dieser Umhüllung versehen ist, wobei die längsseitige Expansionsfähigkeit der Umhüllung durch eine anschlagbildende Umfangsumgürtung begrenzt wird ; und dass die eine am wenigstens der zweien Halbschalen mit einer querseitigen Öffnung (3³) versehen ist, die das Durchlassen hindurch des Ventils (1¹) der aufpumpbaren Umhüllung gestattet.

2. Vorrichtung nach Anspruch 1, dadurch gekennzeichnet, dass die zweie Halbschalen ein mittiges Tragstück (2² - 3²) aufweisen, das mit Tragstücken kleineren Querschnitts verlängert ist, die in die zu verbindenden und zusammenzufügen Elemente eingesteckt werden.

3. Vorrichtung nach Anspruch 2, dadurch gekennzeichnet, dass die Öffnung (3³) zum Durchlassen des Ventils auf dem mittigen Tragstück (3²) der einen der zweien Halbschalen vorgesehen ist.

4. Vorrichtung nach Anspruch 1, dadurch gekennzeichnet, dass die zweien Halbschalen durch federnde Verbindungs- und Haltemittel aneinander durch ihre Expansionsfähigkeit zusammengefügt werden, die bei dem Aufpumpen der Umhüllung wirksam wird.

5. Vorrichtung nach einem der Ansprüche 1 bis 4, dadurch gekennzeichnet, dass die zweie Halbschalen eine längslinige oder winkelige Ebene festsetzen, und dass sie die jeweilige Formgebung aufweisen, die für das Zusammenfügen am wenigstens zweier Elemente erforderlich ist.

6. Vorrichtung nach einem der Ansprüche 1 bis 4, dadurch gekennzeichnet, dass sie bei beliebigen Systemen zur Verbindung und zum Zusammenfügen für Verbindungsstücke, Muffe, Galetten und desgleichen ihre Verwendung finden kann.

7. Vorrichtung nach einem der Ansprüche 1 bis 6, dadurch gekennzeichnet, dass die eine der Halbschalen am wenigstens eine Profilierung aufweist, die das Zentrieren und das aussenseitige Positionieren von Kabeln gestattet.
